# EUROPÄISCHE PATENTANMELDUNG

(11) **EP 0 568 908 A2**
(43) Veröffentlichungstag der Anmeldung: **10.11.1993**
(21) Anmeldenummer: 93106851.4
(22) Anmeldetag: 28.04.1993
(51) Int. Cl.: C08G 59/02, C08G 59/14, C09D 5/44

(54) **Mehrwertige Epoxidverbindungen**

(30) Priorität: 06.05.1992 DE 4214964
(71) Anmelder: BASF Lacke + Farben AG, D-48165 Münster-Hiltrup (DE)
(72) Erfinder: Huemke, Klaus, Dr., W-6701 Friedelsheim (DE); Faul, Dieter, Dr., W-6702 Bad Duerkheim (DE); Hoffmann, Gerhard, Dr., W-6701 Otterstadt (DE)
(74) Vertreter: Karau, Wolfgang, Dr.

(57) **Zusammenfassung**

Mehrwertige Epoxidverbindungen, erhältlich durch Umsetzung von
A) mehrwertigen aromatischen Aminen, deren Aminogruppen pro Molekül mehr als zwei Glycidylgruppen tragen, mit solchen Mengen
B)
   b₁) eines Alkylphenols, dessen Alkylrest 1 bis 12 Kohlenstoffatome enthalten,
   b₂) eines primären oder sekundären aliphatischen Amins, dessen Alkylreste 1 bis 10 Kohlenstoffatome enthalten, oder
   b₃) eines aliphatischen C₁-C₂₀-Alkohols
   oder Mischungen aus mehreren Komponenten (b₁) bis (b₃),
daß die Umsetzungsprodukte im Mittel zwei Epoxidgruppen pro Molekül tragen.

Diese Epoxidverbindungen können zu Kunstharzen umgesetzt werden, aus denen für die kathodische Elektrotarnchlackierung geeignete Dispersionen hergestellt werden können.

## Beschreibung

Die vorliegende Erfindung betrifft neue mehrwertige Epoxidverbindungen, erhältlich durch Umsetzung von
A) mehrwertigen aromatischen Aminen, deren Aminogruppen pro Molekül mehr als zwei Glycidylgruppen tragen, mit solchen Mengen
B)
   b₁) eines Alkylphenols, dessen Alkylreste 1 bis 12 Kohlenstoffatome enthalten,
   b₂) eines primären oder sekundären aliphatischen Amins, dessen Alkylreste 1 bis 10 Kohlenstoffatome enthalten, oder
   b₃) eines aliphatischen C₁-C₂₀-Alkohols
   oder Mischungen aus mehreren Komponenten (b₁) bis (b₃),
daß die Umsetzungsprodukte im Mittel zwei Epoxidgruppen pro Molekül tragen.

Außerdem betrifft die Erfindung die Herstellung der mehrwertigen Epoxidverbindungen. Weiterhin sind Kunstharze, die aus den neuen Epoxidverbindungen hergestellt werden können, Gegenstand der Erfindung, sowie die Herstellung dieser Kunstharze und deren Verwendung für thermisch härtbare Überzugsmittel. Schließlich betrifft die Erfindung Bindemittelsysteme für die Elektrotauchlackierung, die die genannten Kunstharze enthalten, daraus hergestellte Dispersionen, ein Verfahren zur Elektrotauchlackierung unter Verwendung dieser Dispersionen und nach diesem Verfahren beschichtete Gegenstände.

An Überzüge von Metallteilen in der Automobilindustrie, die durch kathodische Elektrotauchlackierung abgeschieden und anschließend thermisch gehärtet werden, werden eine Reihe von Anforderungen gestellt. So sollen sie u.a. guten Korrosionsschutz bieten. Weiterhin sollen sie so elastisch sein, daß Steinschlag nicht sofort zum Abplatzen des Überzugs führt.

In der DE-A 35 42 168 werden Überzüge vorgeschlagen, die als Bindemittel ein stickstoffbasische Gruppen tragendes Polyadditions-/Polykondensationsprodukt enthalten. Letzteres wird durch Umsetzung eines Additionsprodukts, das aus einem sekundären Amin und Polyepoxidverbindungen aufgebaut wird, mit einem bestimmten Polyamid hergestellt. In Überzügen führt dieses Bindemittel zu gutem Korrosionsschutz und ist bei Raumtemperatur elastisch genug, um wirksam gegen Steinschlag zu schützen. Bei tieferen Temperaturen läßt der Schutz gegen Steinschlag wegen Versprödung des Überzugs aber noch zu wünschen übrig.

Es stellte sich daher die Aufgabe, Bindemittel für die Elektrotauchlackierung zur Verfügung zu stellen, die guten Korrosionsschutz bieten und auch bei tiefen Temperaturen elastisch bleiben und somit unempfindlich gegen Steinschlag sind.

Demgemäß wurden die eingangs definierten mehrwertigen Epoxidverbindungen gefunden.

Außerdem wurde ein Verfahren zu ihrer Herstellung, diese Epoxidverbindungen enthaltene Kunstharze und ein Verfahren zur Herstellung dieser Kunstharze gefunden. Weiterhin wurden für die Elektrotauchlackierung geeignete Bindemittelsysteme, die diese Kunstharze enthalten, daraus hergestellte Dispersionen, ein Verfahren zu Elektrotauchlackierung unter Verwendung dieser Dispersionen und nach diesem Verfahren beschichtete Gegenstände gefunden.

Im folgenden werden die für die Anwendung der mehrwertigen Epoxidverbindungen für die Elektrotauchlackierung besonders vorteilhaften Ausführungsformen beschrieben.

### Komponente A

Die als Komponente A geeigneten Verbindungen leiten sich von mehrwertigen aromatischen Aminen ab, die in der Regel 2 Aminogruppen pro Molekül tragen. So kommen für diesen Zweck
9,10-Diaminoanthracen,
2,2-Bis-(4-aminophenyl)-propan,
4,4'-Diaminobenzophenon,
1,2-Bis-(4-aminophenyl)-ethan,
Bis-(2-aminonaphthyl)-methan und
1,5-Diaminonaphthalin sowie
bevorzugt 4,4'-Diaminodiphenylmethan in Betracht.

Diese mehrwertigen aromatischen Verbindungen werden mit einem Epihalohydrin in bekannter Weise (z.B. EP-A 0 155 238) so umgesetzt, daß die Produkte dieser Umsetzung mehr als 2, vorzugsweise 3 bis 4, besonders bevorzugt im Mittel 3,5 bis 4 Glycidylgruppen pro Molekül tragen. Solche Umsetzungsprodukte sind auch teilweise im Handel erhältlich.

### Komponente B

Komponente (A) wird mit gegen Epoxidgruppen reaktiven Verbindungen umgesetzt. Dafür kommen in Betracht:
b₁) Alkylphenole, deren Alkylreste 1 bis 12 Kohlenstoffatome enthalten.
   Bevorzugt werden monoalkylsubstituierte Phenole mit 4 bis 12 Kohlenstoffatomen im Alkylrest. Besonders bevorzugt werden 4-Nonylphenol und 4-Dodecylphenol.
b₂) Primäre oder sekundäre aliphatische Amine, deren Alkylreste 1 bis 10 Kohlenstoffatome enthalten.
   Sekundäre Amine werden bevorzugt verwendet. Die bevorzugte Kohlenstoffzahl der Alkylreste beträgt 3 bis 6. Besonders bevorzugt sind Di(iso-propyl)amin, Di(n-propyl)amin, Di(n-butyl)amin, Dipentylamin und Dihexylamin.
b₃) Aliphatische C₁-C₂₀-Alkohole
   Es kommen bevorzugt Methanol, Ethanol, iso-Propanol, n-Propanol, iso-Butanol und n-Butanol in Betracht.

Weiterhin sind Gemische der Komponenten (b₁) bis (b₃) als Komponente (B) einsetzbar.

Die Komponenten (A) und (B) werden vermischt und zweckmäßigerweise auf Temperaturen von 100 bis 160°C erhitzt. Es ist dabei oft vorteilhaft, die Reaktion in einem polaren Lösungsmittel wie Ethylenglykolmonobutylether oder Propylenglykolmonophenylether auszuführen, wobei die Lösungsmittelmenge in der Regel 5 bis 30 Gew.-% des Ansatzes beträgt. In Gegenwart der Komponente (B) wird nur in untergeordnetem Maße eine Reaktion der Komponente (A) mit einem der genannten Hydroxylgruppen tragenden Lösungsmittel beobachtet.

Die Umsetzung von (A) und (B) wird vorteilhaft in Gegenwart eines Katalysators durchgeführt. Dabei kann es sich um tertiäre Amine, bevorzugt aliphatische tertiäre Amine wie Tributylamin oder Diethylhexylamin handeln. Die Mengen an (B) werden je nach der Zahl der Glycidylgruppen von (A) so gewählt, daß das Umsetzungsprodukt im Mittel 2 Epoxidgruppen pro Molekül trägt.

### Komponente C

Die aus den Komponenten (A) und (B) hergestellten mehrwertigen Epoxidverbindungen können zu Kunstharzen umgesetzt werden. Dies geschieht durch Reaktion mit der Komponente (C). Diese umfaßt im einzelnen folgende Verbindungen:
c₁) Polyalkylenoxide mit einem mittleren Molekulargewicht von 200 bis 2 000.
   Hierbei handelt es sich vorzugsweise um Polymere von Ethylenoxid, 1,2-Propylenoxid, 1,3-Propylenoxid oder Tetrahydrofuran. Homopolymere dieser Verbindungen können ebenso wie Copolymere verwendet werden. Besonders bevorzugt wird Polytetrahydrofuran mit einem mittleren Molekulargewicht von 300 bis 1 000.
c₂) Polyalkylenoxide mit Aminoendgruppen mit einem mittleren Molekulargewicht von 200 bis 2 000.
   Auch diese Verbindungen leiten sich von cyclischen Ethern wie Ethylenoxid, 1,2-Propylenoxid, 1,2-Butylenoxid und Tetrahydrofuran ab, wobei die Endgruppen nach Polymerisation in bekannter Weise in Aminogruppen überführt werden. Besonders bevorzugt werden Poly(tetrahydrofuran)diamine mit einem mittleren Molekulargewicht von 250 bis 750.
c₃) Aliphatische Aminoalkohole mit einer Gesamtkohlenstoffzahl von 2 bis 12.
   Es kommen Verbindungen mit primären und sekundären Aminogruppen wie Ethanolamin oder Methylethanolamin in Frage, aber auch tertiäre Aminogruppen tragende Verbindungen wie Dimethylaminopropanol oder Triethanolamin können eingesetzt werden.
c₄) Bisphenole
   Als Bisphenole kommen Verbindungen wie
   4,4'-Dihydroxybenzophenon,
   4,4'-Dihydroxyphenylsulfon,
   1,1-Bis-(4-hydroxyphenyl)-ethan,
   1,1-Bis-(4-hydroxyphenyl)-isobutan,
   2,2-Bis-(4-hydroxy-3-tert.-butylphenyl)-propan,
   Bis-(4-hydroxynaphthyl)-methan,
   1,5-Dihydroxynaphthalin oder
   bevorzugt 2,2-Bis-(4-hydroxyphenyl)-propan (Bisphenol A) in Betracht.

Weiterhin können Mischungen der Komponenten (c₁) bis (c₄) verwendet werden. Außerdem ist es möglich, verschiedene Komponenten (C) nacheinander mit mehrwertigen Epoxidverbindungen aus (A) und (B) umzusetzen. Die Komponente (C) dient zur Verknüpfung der mehrfunktionellen Epoxidverbindungen zu einem Kunstharz.

Die aus den Komponenten (A) und (B) hergestellten Epoxide können direkt zu den Kunstharzen umgesetzt werden. Dazu wird üblicherweise - wenn vorhanden - der Aminkatalysator zunächst mit einer Säure neutralisiert. Dann setzt man die Komponente (C) zu, gegebenenfalls fügt man wie im Fall der Bisphenole einen Katalysator wie Triphenylphosphin hinzu und erhitzt auf etwa 100 bis 160°C, bis alle Epoxidgruppen abreagiert haben. Es hat sich als vorteilhaft erwiesen, diese Reaktion in einem Lösungsmittel vorzunehmen, da der Ansatz während der Reaktion viskoser wird. Geeignete Lösungsmittel sind in diesem Fall Ethylenglykolmonobutylether oder Propylenglykolmonophenylether.

Die so erhaltenen Kunstharze bilden einen Bestandteil von Bindemittelsystemen, die für die Elektrotauchlackierung verwendet werden können. Diese Bindemittelsysteme enthalten die Kunstharze zu 50 bis 95 Gew.-%, vorzugsweise 50 bis 75 Gew.-%. Weiterhin bestehen sie aus einem Vernetzer D in Mengen von 5 bis 50, vorzugsweise 25 bis 50 Gew.-%.

### Vernetzer D

Bei den an sich bekannten Vernetzern D handelt es sich um Verbindungen, die aufgrund unterschiedlicher Reaktionen vernetzend wirken können. Folgende Verbindungsklassen kommen dafür bevorzugt in Betracht:
d₁) Amidierungsvernetzer,
d₂) Transaminierungsvernetzer,
d₃) Transesterifizierungsvernetzer und
d₄) mehrwertige verkappte Isocyanate.
d₁) Amidierungsvernetzer sind solche organischen Verbindungen, die mit primären und/oder sekundären Aminogruppen des Kunstharzes erst unter Einbrennbedingungen unter Amidbildung reagieren. Beispielsweise handelt es sich hierbei um Harze, die mindestens zwei Carboalkoxymethylgruppen enthalten mit einem mittleren Molekulargewicht von 200 bis 10 000, deren Aufbau in der DE-A 31 45 714 beschrieben wird.
d₂) Transaminierungsvernetzer sind organische Verbindungen, die ebenfalls mit primären und/oder sekundären Aminogruppen des Kunstharzes unter Einbrennbedingungen unter Aminabspaltung so reagieren, daß über diese Gruppen Vernetzer und Kunstharz verknüpft werden. Als Beispiele sind Mannich-Basen zu nennen, die aus Phenolen, Formaldehyd und sekundären Aminen aufgebaut werden. Besonders bevorzugt werden solche Verbindungen, die aus Polyalkylenoxid-diglycidylethern mit Phenolen wie Bisphenol A aufgebaut werden und anschließend mit Dialkylaminen wie Dimethylamin, Diethylamin, Piperidin und mit Formaldehyd oder Formaldehyd liefernden Verbindungen umgesetzt werden.
d₃) Transesterifizierungsvernetzer können mit Hydroxygruppen tragenden Kunstharzen unter Umesterung reagieren. Beispiele sind Harze, die aus Acrylsäureestern aufgebaut sind, aber auch Harze mit Malonestergruppen, die in der DE-A 37 35 601 beschrieben werden.
d₄) Mehrwertige Isocyanate werden besonders bevorzugt. Als Verbindungen sind z.B. Toluylendiisocyanat, 4,4'-Diphenylmethandiisocyanat, Isophorondiisocyanat oder trimerisiertes Hexamethylendiisocyanat zu nennen. Diese Isocyanate werden vorzugsweise in verkappter Form eingesetzt. Übliche Verkappungsmittel sind Amine wie Dibutylamin, die zu Harnstoffverbindungen reagieren, Alkohole wie Methanol, Ethanol oder mehrwertige Alkohole wie Polyoxyalkylenglykole, welche Urethangruppen bilden, sowie Ketoxime wie Methylethylketoxim, die ebenfalls unter Addition an eine Isocyanatgruppe reagieren.

Die erfindungsgemäßen Bindemittel sind nach teilweiser oder vollständiger Neutralisation in Wasser dispergierbar. Zur Neutralisation geeignete Säuren sind bevorzugt Carbonsäuren wie Ameisensäure, Essigsäure, Propionsäure oder Milchsäure, aber auch Mineralsäuren wie Phosphorsäure. Die Neutralisation des Kunstharzes und des Vernetzers kann getrennt, bevorzugt aber gemeinsam nach vorheriger Vermischung erfolgen. Die so erhaltenen Dispersionen können mit Wasser, gegebenenfalls nach Entfernung organischer Lösungsmittel, auf einen gewünschten Feststoffgehalt verdünnt werden.

Zur Herstellung von Elektrotauchbädern können den erfindungsgemäßen Bindemitteln weitere Bindemittel, Pigmente, sowie in der Elektrotauchlackierung übliche Hilfs- und Zusatzstoffe wie Füllstoffe, Korrosionsinhibitoren, Dispergierhilfsmittel, Entschäumer und/oder Lösungsmittel zugesetzt werden.

Die Elektrotauchlackierung erfolgt in an sich bekannter Weise.

Die erfindungsgemäßen Bindemittel bewirken nach kathodischer Abscheidung und thermischer Härtung einen guten Korrosionsschutz auf Metallteilen. Weiterhin zeigen sie - auch bei tiefen Temperaturen - eine nur geringe Empfindlichkeit gegen Steinschlag.

Die erfindungsgemäßen mehrwertigen Epoxidverbindungen sind interessante Bausteine für Epoxidharze. Daraus hergestellte erfindungsgemäße Bindemittel finden als hitzehärtbare Überzüge Verwendung.

### Beispiele

1.1 Herstellung einer erfindungsgemäßen mehrwertigen Epoxidverbindung
   3,08 kg eines Polyglycidylethers auf Basis von 4,4'-Diaminodiphenylmethan (Epoxidäquivalentgewicht 77; durchschnittliche Zahl von Epoxidgruppen pro Molekül 3,8) wurden in 760 g Ethylenglykolmonobutylether mit 1 100 g (5 mol) 4-Nonylphenol und 3,35 g Diethylhexylamin versetzt und auf 130°C erhitzt, bis das Epoxidäquivalentgewicht 385 betrug.
1.2 Herstellung eines erfindungsgemäßen Kunstharzes K
   Nach Zugabe von 6,35 g konzentrierter Ameisensäure zur nach 1.1 erhaltenen Reaktionsmischung wurden 513 g (2,25 mol) Bisphenol A und 1,10 g Triphenylphosphin in 110 g Ethylenglykolmonobutylether zugesetzt. Die Temperatur wurde auf 130°C gehalten, bis das Epoxidäquivalentgewicht 650 betrug. Bei 70°C wurden dann 300 g Polytetrahydrofurandiamin mit einem mittleren Molekulargewicht von 600 und 165 g (1,58 mol) Dimethylaminopropanol zugesetzt. Der Ansatz wurde bei dieser Temperatur gehalten, bis keine Epoxidgruppen mehr nachweisbar waren.
   Die Harzlösung wies bei einem Feststoffgehalt von 85 Gew.-% eine Viskosität von 4 400 mPas bei 75°C auf.
1.3 Herstellung eines Vergleichskunstharzes K_{V} (nach DE-A 35 42 168)
   3,06 kg (3,15 mol) eines Diglycidylethers auf Basis von Bisphenol A und Epichlorhydrin (Epoxidäquivalentgewicht 485) wurden in 570 g Toluol und 534 g Isobutanol bei 65°C 135 g (1,8 mol) Methylethanolamin versetzt. Als ein Epoxidäquivalentgewicht von 835 erreicht war, setzte man 656 g einer Lösung eines Kondensationsprodukts sowie 140 g Toluol zu und erwärmte 2 h auf 80°C.
   Das Kondensationsprodukt wurde durch Umsetzung von 290 g (2,5 mol) Hexamethylendiamin, 218 g (0,39 mol) Dimerfettsäure und 70 g (0,25 mol) Leinölfettsäure bei 195°C unter Abdestillieren des Reaktionswassers hergestellt. Nach Zusatz von 242 g Toluol hatte diese Lösung einen Feststoffgehalt von 70 Gew.-% und eine Aminzahl von 350 mg/g.
2. Herstellung von Vernetzern
2.1 Vernetzer D1 (nach EP-A 304 834, dortiges Beispiel 1)
   Zu 696 g (4 mol) Toluylendiisocyanat (80 Gew.-% 2,4- und 20 Gew.-% 2,6-Isomer) und 2,8 g Dibutylzinndilaurat als Katalysator wurden 425 g Polyoxypropylenglykol mit einem mittleren Molekulargewicht von 425 bei 60°C gegeben. Dann wurden 522 g (6 mol) Methylethylketoxim zugesetzt und bei 60°C gehalten, bis keine freien Isocyanatgruppen mehr nachweisbar waren.
2.2 Vernetzer D2
   5,04 kg (10 mol) trimerisiertes Hexamethylendiisocyanat wurden in 3,80 kg Methylisobutylketon bei 70°C mit 3,88 kg (30 mol) Dibutylamin umgesetzt, bis keine freien Isocyanatgruppen mehr nachweisbar waren.
3. Herstellung von Dispersionen
3.1 Herstellung von Dispersionen aus K
3.1.1 Beispiel 1
   780 g K wurden mit 340 g D1 gemischt und mit 19,5 g Essigsäure neutralisiert. Durch azeotrope Destillation wurden organische Lösungsmittel entfernt und mit Wasser ein Feststoffgehalt von 35 Gew.-% eingestellt.
3.1.2 Beispiel 2
   Verfahren wie unter 3.1.1; 780 g K, 485 g D2
3.2 Herstellung einer Dispersion aus K_{V} (Vergleichsbeispiel)
   Verfahren wie unter 3.1; 695 g K_{V}; 298 g D2; Neutralisation mit 16 g Essigsäure
4. Herstellung einer Pigmentpaste
   580 g Diglycidylether auf Basis Bisphenol und Epichlorhydrin (Epoxidäquivalentgewicht 485) und 145 g eines solchen Diglycidylethers mit einem Epoxidäquivalentgewicht von 188 wurden bei 100°C zu 452 g (3,9 mol) Hexamethylendiamin gegeben. Nach 30 Minuten wurde das überschüssige Diamin bei 200°C und 30 mbar abgezogen. Dann wurden 57,6 g (0,2 mol) Stearinsäure und 173 g (0,3 mol) dimere Fettsäure in 115 g Xylol zugesetzt. Entstehendes Reaktionswasser wurde bei 175°C azeotrop abdestilliert. Nach Zugabe von 58 g Ethylenglykolmonobutylether und 322 g Isobutanol hatte die Reaktionslösung einen Feststoffgehalt von 70 Gew.-% und eine Viskosität von 2 240 mPas bei 75°C. 110 g dieser Harzlösung wurden in einer Kugelmühle mit 36 g Ethylenglykolmonobutylether, 3 g Essigsäure, 170 g Titandioxid, 18 g Bleisilikat, 4,5 g Ruß und 170 g Wasser bis zu einer Kornfeinheit von unter 7 µm vermahlen.
5. Elektrotauchlackierung und Meßdaten
   1 942 g Dispersion und 698 g Pigmentpaste wurden vermischt und mit Wasser auf einen Feststoffgehalt von 20 Gew.-% eingestellt.
   An als Kathode geschalteten phosphatierten Blechen wurden bei Raumtemperatur in üblicher Weise bei 250 bis 500 V Überzüge abgeschieden und bei 165°C Objekttemperatur über 20 Minuten gehärtet.

### Steinschlag-Test (nach DIN 55 995, Verfahren A)

Bei -20°C wurden 5 Hammerschläge an verschiedenen Stellen auf ein mit einem Überzug versehenes Probeblech ausgeübt. Dabei wurde gemessen:
1. Abplatzung des Überzugs in mm²
2. Die Anzahl der Schläge, die bis auf das Blech durchdringen
Diese Zahl ist indirekt ein Maß dafür, wie tief der Überzug durch Steinschlag beschädigt wird und wie häufig sich Roststellen an einem so angegriffenen Blech bilden können.

| | Abplatzung [mm²] | Zahl der Schläge, die bis auf das Blech durchdringen |
|---|---|---|
| Beispiel 1 (nach 3.1.1) | 6 | 2 |
| Beispiel 2 (nach 3.1.2) | 5 | 1 |
| Vergleichsbeispiel (nach 3.2) | 10 | 5 |

## Patentansprüche

1. Mehrwertige Epoxidverbindungen, erhältlich durch Umsetzung von
A) mehrwertigen aromatischen Aminen, deren Aminogruppen pro Molekül mehr als zwei Glycidylgruppen tragen, mit solchen Mengen
B)
b₁) eines Alkylphenols, dessen Alkylreste 1 bis 12 Kohlenstoffatome enthalten,
b₂) eines primären oder sekundären aliphatischen Amins, dessen Alkylreste 1 bis 10 Kohlenstoffatome enthalten, oder
b₃) eines aliphatischen C₁-C₂₀-Alkohols
oder Mischungen aus mehreren Komponenten (b₁) bis (b₃),
daß die Umsetzungsprodukte im Mittel zwei Epoxidgruppen pro Molekül tragen.

2. Mehrwertige Epoxidverbindungen nach Anspruch 1, in denen die Komponente (A) N,N,N',N'-Tetraglycidyl-4,4'-diaminodiphenylmethan ist.

3. Verfahren zur Herstellung von mehrwertigen Epoxidverbindungen gemäß Anspruch 1, dadurch gekennzeichnet, daß man
A) mehrwertige aromatische Amine, deren Aminogruppen pro Molekül mehr als zwei Glycidylgruppen tragen, mit solchen Mengen
B)
b₁) eines Alkylphenols, dessen Alkylreste 1 bis 12 Kohlenstoffatome enthalten,
b₂) eines primären oder sekundären aliphatischen Amins, dessen Alklyreste 1 bis 10 Kohlenstoffatome enthalten enthalten, oder
b₃) eines aliphatischen C₁-C₂₀-Alkohols
oder Mischungen aus mehreren Komponenten (b₁) bis (b₃) umsetzt,
daß die Umsetzungsprodukte im Mittel zwei Epoxidgruppen tragen.

4. Kunstharze, erhältlich durch Umsetzung mehrwertiger Epoxidverbindungen gemäß Anspruch 1 oder 2 mit
C)
c₁) einem Polyalkylenoxid mit einem mittleren Molekulargewicht von 200 bis 2 000,
c₂) einem Polyalkylenoxid mit Aminoendgruppen mit einem mittleren Molekulargewicht von 200 bis 2 000,
c₃) einem aliphatischen Aminoalkohol mit einer Gesamtkohlenstoffzahl von 2 bis 12 oder
c₄) einem Bisphenol
oder Mischungen aus mehreren Komponenten (c₁) bis (c₄).

5. Verfahren zur Herstellung von Kunstharzen gemäß Anspruch 4, dadurch gekennzeichnet, daß man mehrwertige Epoxidverbindungen gemäß Anspruch 1 oder 2 mit
C)
c₁) einem Polyalkylenoxid mit einem mittleren Molekulargewicht von 200 bis 2 000,
c₂) einem Polyalkylenoxid mit Aminoendgruppen mit einem mittleren Molekulargewicht von 200 bis 2 000,
c₃) einem aliphatischen Aminoalkohol mit einer Gesamtkohlenstoffzahl von 2 bis 12 oder
c₄) einem Bisphenol
oder Mischungen aus mehreren Komponenten (c₁) bis (c₄) umsetzt.

6. Verwendung der Kunstharze gemäß Anspruch 4 oder 5 als Bindemittelkomponente für thermisch härtbare Überzugsmittel.

7. Für die kathodische Elektrotauchlackierung geeignete Bindemittelsysteme aus
1. 50 bis 95 Gew.-% eines Kunstharzes gemäß Anspruch 4 oder 5 und
2. 5 bis 50 Gew.-% eines Vernetzers.

8. Für die kathodische Elektrotauchlackierung unmittelbar verwendbare wäßrige Dispersionen, enthaltend ein Bindemittelsystem gemäß Anspruch 7.

9. Verfahren zur kathodischen Elektrotauchlackierung, dadurch gekennzeichnet, daß man hierzu Dispersionen gemäß Anspruch 8 in an sich bekannter Weise verwendet.

10. Verwendung der wäßrigen Dispersionen gemäß Anspruch 8 für die kathodische Elektrotauchlackierung.

11. Mittels kathodischer Elektrotauchlackierung beschichtete Gegenstände, erhältlich nach dem Verfahren gemäß Anspruch 9.
